# EUROPEAN PATENT APPLICATION

(11) **EP 4 848 250 A1**
(43) Date of publication of application: **02.12.2026**
(21) Application number: 25179241.2
(22) Date of filing: 27.05.2025
(51) Int. Cl.: G08C 19/28, G01D 4/00

(54) **ADVANCED METER INFRASTRUCTURE AND METHOD FOR MONITORING UTILITY DEVICES THEREOF**

(71) Applicant: Kamstrup A/S, 8660 Skanderborg (DK)
(72) Inventor: Kaya, Elena, 8660 Skanderborg (DK); Munk Berg, Michael Due, 8660 Skanderborg (DK); Kramer Nielsen, Ann Louise, 8660 Skanderborg (DK)
(74) Representative: Patentanwälte Hemmer Lindfeld Frese Partnerschaft mbB

(57) **Abstract**

The present disclosure relates to an advanced metering infrastructure, AMI (1), wherein the AMI (1) comprises:
- a plurality of utility devices (7), wherein the utility devices (7) comprise
∘ utility meters (7a) being installed in a utility distribution network (3) for determining consumption data, and
∘ one or more radio infrastructure devices (7b) for wirelessly receiving and collecting the consumption data from at least one of the utility meters (7a);

- a head-end-system, HES, (9) for processing utility device-associated data that includes the consumption data, wherein the HES (9) is configured to update the utility device-associated data;
- a meter data management, MDM, system (11) with a graphical user interface, GUI (15), wherein the GUI (15) is configured to provide a filter option for a user to filter a subgroup of the utility devices (7) based on user-selectable filter criteria to be applied to the utility device-associated data; and
- a data storage (19) for storing user-selected filter criteria,

wherein the MDM system (11) is configured to dynamically refilter the same or a changed subgroup of the utility devices (7) based on the stored user-selected filter criteria to be applied to the updated utility device-associated data on a regular basis, upon a change of the utility device-associated data or upon a user request,
wherein the GUI (15) is configured to display pre-determined or user-selectable monitoring data based on the utility device-associated data of the currently filtered subgroup of the utility devices (7).

## Description

### TECHNICAL FIELD

The present disclosure relates to an advanced meter infrastructure (AMI) and a method for monitoring utility devices of such an AMI. The utility devices of an AMI typically include utility meters, e.g. water flow meters, electricity meters, gas meters or heat meters, and radio infrastructure devices, e.g. data concentrators, gateways and antennas, as well as pumps and sensor devices. The utility meters are usually installed in a utility distribution network for determining consumption data and the radio infrastructure devices receive the consumption data wirelessly from the utility meters.

### BACKGROUND

It is known that utility providers of water, electricity, gas and/or thermal energy use an AMI to efficiently and reliably manage customer billing. Such AMI comprise utility meters, also denoted as "smart meters", that are installed in a utility distribution network, e.g. a water supply network, an electricity grid, a gas supply network, or a district heating network, at a plurality of distributed installation locations, e.g. households, commercial buildings or municipal facilities. The utility meters communicate consumption data to a head-end-system (HES) via a wireless communication with radio infrastructure devices of the AMI, e.g. data concentrators, gateways and antennas. A single data collector may collect the consumption data provided by thousands of utility meters. Several data collectors may be distributed over a city or region to coverall utility meters located therein. Typically, the utility meters communicate with the data collectors wirelessly using license-free frequency bands in a manner that saves as much battery power of the consumption meters as possible, because there is usually, with the exception of electricity meters, no opportunity for recharging or exchanging the consumption meter battery.

A utility provider in charge of the AMI is generally interested in monitoring and managing the utility devices of the AMI, i.e. utility meters and radio infrastructure devices. For example, low radio communication performance, incorrect installations, network leakage, or other potential problems of the AMI should be recognised and dealt with as quickly as possible. Therefore, known AMI usually comprise a meter data management (MDM) software that allows a user to monitor and manage utility meters of the AMI.

For example, US 10,677,629 describes an MDM system for managing flow meters in a plurality of district metering areas (DMA). However, such known MDM systems are usually focussed on monitoring the consumption data that the flow meters have provided in a past user-selectable time window. Thus, there is room for improving the monitoring options for a user.

It is therefore an object of the present disclosure to provide an AMI and a method for monitoring utility devices of an AMI, wherein the user has better and more options for combining and monitoring data of the utility devices of the AMI. For example, such better and more options should allow a user to improve leakage detection in a water supply network or district heating network.

### SUMMARY

According to a first aspect of the present invention, an advanced metering infrastructure, AMI, is provided, wherein the AMI comprises:
- a plurality of utility devices, wherein the utility devices comprise
   ▪ utility meters being installed in a utility distribution network for determining consumption data, and
   ▪ one or more radio infrastructure devices for wirelessly receiving and collecting the consumption data from at least one of the utility meters;
- a head-end-system, HES, for processing utility device-associated data that includes the consumption data, wherein the HES is configured to update the utility device-associated data;
- a meter data management, MDM, system with a graphical user interface, GUI, wherein the GUI is configured to provide a filter option for a user to filter a subgroup of the utility devices based on user-selectable filter criteria to be applied to the utility device-associated data; and
- a data storage for storing user-selected filter criteria,

wherein the MDM system is configured to dynamically refilter the same or a changed subgroup of the utility devices based on the stored user-selected filter criteria to be applied to the updated utility device-associated data on a regular basis, upon a change of the utility device-associated data or upon a user request,
wherein the GUI is configured to display pre-determined or user-selectable monitoring data based on the utility device-associated data of the currently filtered subgroup of the utility devices.

The inventive AMI comprises an MDM system that provides much more and better options for a user to monitor utility devices of the AMI than any currently known system. Firstly, the user is able to define a filter fora subgroup of utility devices that does not only comprise utility meters, but also radio infrastructure devices of the AMI, for example concentrators, gateways and/or antennas. The utility devices of the AMI that a user can select for filtering the subgroup may even comprise pumps and sensor devices. The possibility for a user to filter different kinds of utility devices in a subgroup offers many more options for making more meaningful comparisons and correlations based on the utility device-associated data. Secondly, the utility device-associated data that is made available to a user may not only include consumption data, but much more utility device-associated data, e.g. a mix of radio communication performance data, error or warning event counters, installation/maintenance dates, acoustic noise caused by leakage in pipes, etc. Thirdly, the GUI allows for a dynamic update of a currently filtered subgroup, so that a user can monitor live or in real-time if changes in the device-associated data leads to changes of the currently filtered subgroup. Thereby, a user may monitor live or in real-time an effect of a certain management action on the currently filtered subgroup. For example, a subgroup can be defined by filter criteria that select consumers with a large consumption of water or gas, and the filter criteria of the filtered subgroup are then stored for dynamic updating. A user can monitor this filtered subgroup and may be alerted if new consumers fulfil the filter criteria.

It should be noted that the pre-determined or user-selectable monitoring data may be identical to the utility device-associated data used for filtering or at least partly different from the utility device-associated data used for filtering. In some cases, a user may be interested to monitor the device-associated data that the user selected to filter the subgroup. In other cases, a user may be interested to monitor other device-associated data that the user has not selected to filter the subgroup. Preferably, it is user-selectable what monitoring data should be displayed. Alternatively, or in addition, it may be pre-determined what monitoring data is displayed, e.g. in form of a default or suggested setting of the GUI, wherein the setting may be fixed and/or at least partly user-editable.

Optionally, the utility meters may include electricity meters, water flow meters, gas flow meters or heat flow meters, and/or the one or more radio infrastructure devices comprise one or more data concentrators, gateways and/or antennas. For example, the GUI may offer filter criteria to define a filter for a subgroup that comprises both water flow meters and data concentrators. That allows a user to make meaningful correlations of the device-associated data that goes far beyond monitoring only the consumption data. For example, if a data concentrator shows a low radio performance, the consumption data may be too low due to lost communication packages. Thus, leakage detection may be impaired for those utility devices with low radio performance.

Optionally, the GUI may be configured to provide the filter option in form of a rule builder including user-selectable Boolean logic to combine different user-selectable filter criteria to be applied to the utility device-associated data. A rule builder provides for a very large variety of combinations of filter criteria that the user can define and combine as needed. For example, as a first filter criterion, the GUI may offer a user to apply a user-selectable relational operator, e.g. "=", "≥", "≤", "≠", "<", or ">", to compare a user-selectable utility device-associated property, e.g. utility meter type, average daily consumption, or installation date, with a user-selectable value. The user may combine said first filter criterion with a second filter criterion by a Boolean operator, e.g. "AND", "OR" or "NOT", wherein the second filter criterion may be another application of a user-selectable relational operator, e.g. "=", "≥", "≤", "≠", "<", or ">", to compare another user-selectable utility device-associated property, e.g. utility meter type, average daily consumption, or installation date, with another user-selectable value. The rule builder may include an option of using brackets to define the order of processing the Boolean logic. The GUI may offer a list of current device-associated properties, which may include
- meter status (active or non-active)
- meter type
- flow rate
- device type (concentrator, main meter, or sub meter)
- installation with/without a device
- communication status with a concentrator (on/off)
- installation date
- initial reading (yes/no)
- radio communication performance (percentage)
- daily consumption
- acoustic noise in pipe
- frost warning (yes/no)
- water temperature
- burst event
- custom tags (e.g. roadworks ongoing)

Optionally, the GUI may be configured to provide a mode toggle for a user to veto a change of the filtered subgroup of the utility devices. Sometimes, it may be desirable for a user to freeze the subgroup for analysing or documenting purposes. The mode toggle offers a user to command the GUI to refrain from refiltering the currently filtered subgroup in case of any change of the utility device-associated data.

Optionally, the GUI may be configured to store or display first pre-determined or user-selectable monitoring data based on the utility device-associated data of a first filtered subgroup of the utility devices and to store or display second pre-determined or user-selectable monitoring data based on the utility device-associated data of a second filtered subgroup of the utility devices for comparison with the first pre-determined or user-selectable monitoring data. It may be very helpful for a user to display the monitoring data of two filtered subgroups in parallel, e.g. on a split screen or adjacent monitors for direct comparison. It is also advantageous for a user to be able to compare old stored filtered subgroups with newly stored or newly filtered subgroups. Such a comparison can give information about undesired changes in the utility distribution network, in the utility devices, or in the radio infrastructure devices. These subgroups can be compared manually to each other or, in an advantageous embodiment, automatically by the MDM system. The historically filtered stored subgroups or the newly stored or newly filtered subgroups can be dynamically updated or stored as static subgroups.

Optionally, the MDM system may be configured to prioritize among the first filtered subgroup and the second filtered group of utility devices for maintenance service based on a prioritization algorithm of the MDM system. For example, the MDM system may be programmed to trigger automatically a maintenance service action based on a prioritization algorithm of the MDM system. Such a prioritization algorithm may be pre-determined and/or at least partly user-editable.

Optionally, the user-selected filter criteria to be applied to the utility device-associated data may comprise one or more of a group consisting of:
- a user-defined time window of consumption data collection,
- a range of consumption data,
- a device operation mode,
- an event counter threshold,
- a radio communication performance indicator, and
- a device type.

Optionally, the GUI may be configured to display a map indicating locations of at least some of the utility devices, and to give a user an option to draw a polygon on the map encompassing a subset of the displayed utility devices as at least one of the user-selectable filter criteria. Such a map-based filter criterion may be applied in addition, i.e. combined with a Boolean "AND"-operator, to other user-selectable filter criteria.

Optionally, the MDM system may be configured to include accessible geographic information system, GIS, data of the utility devices for applying the user-selectable filter criteria to the utility device-associated data. For example, a user may select all utility devices in a certain street or city, with a certain postal code or an area of certain altitudes and longitudes.

Optionally, the HES may be configured to process the utility device-associated data in form of acoustic noise data from pipes, flow rates, radio communication performance, alarms, water temperatures and/or event counters.

Optionally, the GUI may be configured to display a map indicating locations of at least one of the radio infrastructure devices and indicators for highlighting utility meters that have an indicated radio communication performance with said at least one of the radio infrastructure devices below a user-selectable limit, wherein the GUI is further configured to give a user an option to filter some or all of the highlighted utility meters as at least one of the user-selected filter criteria for filtering a subgroup of the utility devices. This is convenient and beneficial for a user to focus the monitoring on those utility meters that have radio communication problems.

According to another aspect of the present invention, a computer-implemented method is provided for monitoring utility devices of an advanced metering infrastructure, AMI, by using a meter data management, MDM, system of the AMI, wherein the method comprises:
- displaying, by a graphical user interface, GUI, of the MDM system, a filter option for a user to define a filter for a subgroup of the utility devices based on user-selected filter criteria being applied to utility device-associated data,
- storing the user-selected filter criteria,
- updating the utility device-associated data,
- dynamically refiltering the same or a changed subgroup of the utility devices based on the stored user-selected filter criteria being applied to the updated utility device-associated data on a regular basis, upon a change of the utility device-associated data or upon a user request, and
- displaying, by the GUI of the MDM system, pre-determined or user-selected monitoring data based on the utility device-associated data of the currently filtered subgroup of the utility devices.

The inventive computer-implemented method is preferably part of an MDM software, wherein the MDM system is the computer hardware of the AMI that executes the MDM software. Most preferably, the inventive computer-implemented method disclosed herein may be implemented in form of an MDM software being hosted and executed on a cloud server, so that a user may access the GUI of the MDM software by an internet browser on any ordinary computer device.

Optionally, the utility devices may be of the following types:
- utility meters being installed in a utility distribution network for determining consumption data, and
- radio infrastructure devices for wirelessly receiving and collecting the consumption data from at least one of the utility meters.
The utility devices that a user can select for filtering the subgroup may even include pumps and sensor devices. The possibility for a user to filter different kinds of utility devices in a subgroup offers many more options for making more meaningful comparisons and correlations based on the utility device-associated data.

Optionally, the utility devices may comprise utility meters, for example, electricity meters, water flow meters, gas meters or heat meters, and/or at least one data collector for collecting the utility device-associated data from a plurality of such utility meters.

Optionally, the filter option may be provided in form of a rule builder including user-selectable Boolean logic to combine different user-selected filter criteria being applied to the utility device-associated data.

Optionally, the method may further comprise displaying, by the GUI of the MDM system, a mode toggle for a user to veto a change of the filtered subgroup of the utility devices.

Optionally, the step of displaying pre-determined or user-selected monitoring data may include displaying first pre-determined or user-selected monitoring data based on the utility device-associated data of a first filtered subgroup of the utility devices and displaying second pre-determined or user-selected monitoring data based on the utility device-associated data of a second filtered subgroup of the utility devices for comparison with the first pre-determined or user-selected monitoring data.

Optionally, the method may further comprise a step of prioritizing among the first filtered subgroup and the second filtered group of utility devices for maintenance service based on a prioritization algorithm of the MDM system.

Optionally, the user-selected filter criteria applied to the utility device-associated data may comprise one or more of a group consisting of:
- a user-defined time window of consumption data collection,
- a range of consumption data,
- a device operation mode,
- an event counter threshold,
- a radio communication performance indicator, and
- a device type.

Optionally, the step of displaying a filter option may include displaying a map indicating locations of at least some of the utility devices, wherein a user is given an option to draw a polygon on the map encompassing a subset of the displayed utility devices as at least one of the user-selected filter criteria.

Optionally, user-selected filter criteria applied to utility device-associated data may include accessible geographic information system, GIS, data of the utility devices.

Optionally, the utility device-associated data may comprise acoustic noise data, flow rates, radio communication performance, water temperatures and/or event counters.

Optionally, the step of displaying a filter option may include displaying a map indicating locations of at least one radio infrastructure device and indicators for highlighting utility meters that have a wireless communication strength with said at least one radio infrastructure device below a user-selectable limit, wherein a user is given an option to filter some or all of the highlighted utility meters as at least one of the user-selected filter criteria for filtering a subgroup of the utility devices.

The method disclosed herein may be implemented in form of compiled or uncompiled software code that is stored on a computer-readable medium with instructions for executing the method.

The present invention may be implemented in form of a system, a method, and/or a computer program product at any possible technical detail level of integration. The computer program product may include a computer readable storage medium (or media) having computer readable program instructions thereon for causing a processor to carry out aspects of the present invention.

The computerreadable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductorstorage device, orany suitable combination of the foregoing. A non-exhaustive list of more specific examples of the computer readable storage medium includes the following: a portable computerdiskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or othertransmission media (e.g., light pulses passing through a fibre-optic cable), or electrical signals transmitted through a wire.

Computer readable program instructions described herein can be downloaded from a computer readable storage medium or to an external computer or external storage device via a network, for example, the Internet, a local area network, a wide area network and/or a wireless network. The network may comprise copper transmission cables, optical transmission fibres, wireless transmission, routers, firewalls, switches, gateway computers and/or edge servers. A network adapter card or network interface may receive computer readable program instructions from the network and may forward the computer readable program instructions for storage in a computer readable storage medium.

### SUMMARY OF THE DRAWINGS

Embodiments of the present disclosure will now be described by way of example with reference to the following figures of which:
- Fig. 1: shows a schematic drawing of an embodiment of the inventive AMI;
- Fig. 2: shows a schematic flowchart of an embodiment of the inventive method;
- Fig. 3: shows a schematic representation of a screenshot of the GUI of an MDM system of an embodiment of the inventive AMI at a filtering stage;
- Fig. 4: shows a schematic representation of another screenshot of the GUI shown in Fig. 3 at a filtering stage;
- Fig. 5: shows a schematic representation of another screenshot of the GUI shown in Figs. 4 at a filtering stage; and
- Fig. 6: shows a schematic representation of another screenshot of the GUI shown in Figs. 5 at a monitoring stage.

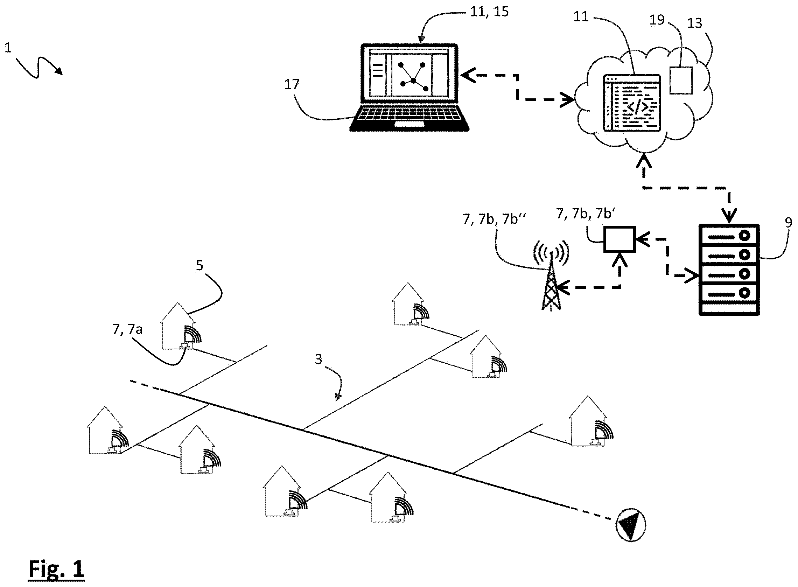

Fig. 1 shows an example of an embodiment of the inventive advance metering infrastructure, AMI, 1. In the shown example, a utility distribution network 3 in form of a pipe network supplies consumer households 5 with a fluid, e.g. water or gas. The AMI 1 is installed and operated by an operator of the utility distribution network 3 for the primary purpose of billing each consumer household 5 according to the consumption of fluid provided. The AMI 1 comprises a plurality of utility devices 7 including utility meters 7a and radio infrastructure devices 7b, e.g. data concentrators 7b', gateways, antennas 7b''. The utility meters 7a, e.g. fluid flow meters, are installed at the consumer household 5 to measure the consumption of fluid by said household 5. Fig. 1 only shows one radio infrastructure device 7b in form of a data concentrator. The data concentrator 7b' is in radio communication with a plurality of the utility meters 7a, e.g. hundreds or thousands of them to receive wirelessly consumption data. It should be noted that the utility meters 7a not only communicate consumption data, but also other utility device-associated data, e.g. radio communication quality indicator, meter type, event counter, battery status indicator, installation date, etc. The data concentrator 7b' may also provide or generate utility device-associated data of its own, e.g. number of utility meters 7a with active communication, number of low-quality communications, a list of utility meters 7a with lost communication, etc.

The AMI 1 further comprises a head-end-system, HES, 9 for processing the utility device-associated data from the utility meters 7a and the radio infrastructure device 7b to fill and update a database containing the utility device-associated data.

To allow a user to monitor the utility devices 7 of the AMI1, the AMI 1 further comprises a meter data management, MDM, system 11 that is implemented in form of a software being executed by a cloud service 13. The cloud service 13 has a data communication with the HES 9 and thereby access to the updated database containing the utility device-associated data.

The MDM system 11 provides a graphical user interface, GUI, 15 that can be accessed by an internet browser of a computer device 17. The GUI 15 is configured to provide a filter option for a user to filter a subgroup of the utility devices 7 based on user-selectable filter criteria to be applied to the utility device-associated data. The AMI1 further comprises a data storage 19 for storing user-selected filter criteria. In Fig. 1, the data storage 19 is part of the cloud service 13. Alternatively, the data storage 19 may be part of the HES 9 or of device of the AMI 1. It should be noted that the filtered subgroup of utility devices 7 may comprise utility meters 7a as well as radio infrastructure devices 7b.

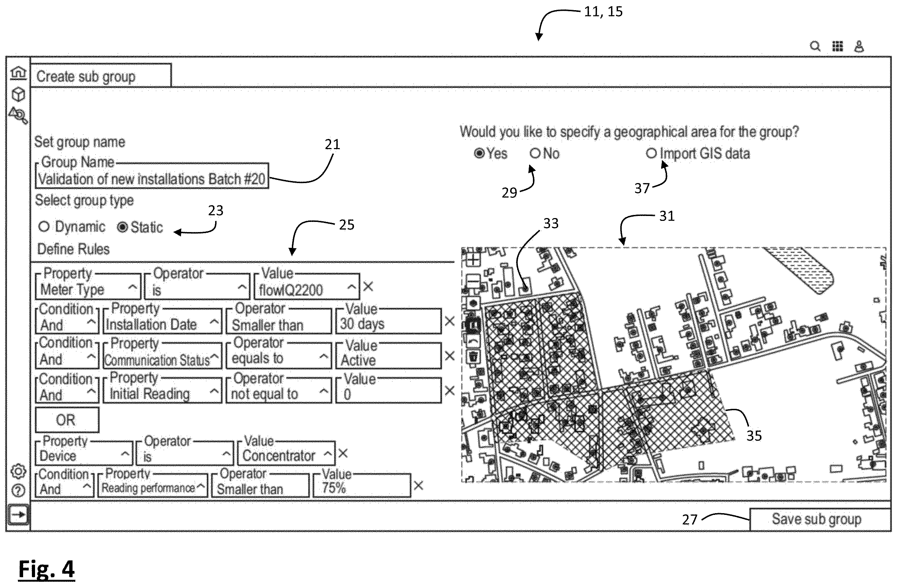

The MDM system 11 is configured to dynamically refilter the same or a changed subgroup of the utility devices 7 based on the stored user-selected filter criteria to be applied to the updated utility device-associated data on a regular basis, upon a change of the utility device-associated data or upon a user request. As shown in Fig. 4, the GUI 15 is configured to display pre-determined or user-selectable monitoring data based on the utility device-associated data of the currently filtered subgroup of the utility devices 7.

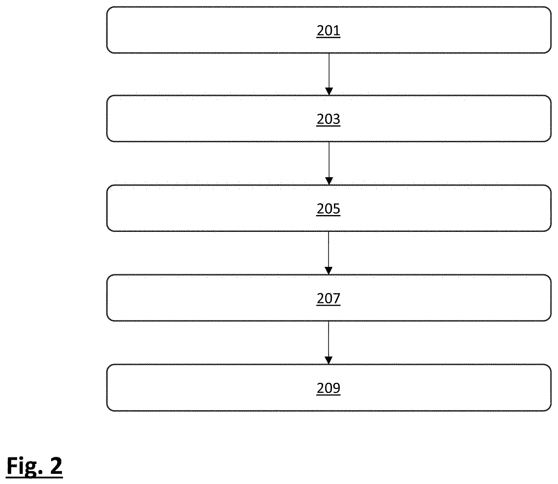

Fig. 2 shows a flowchart of an example of an embodiment of an inventive computer-implemented method for monitoring the utility devices 7 of the AMI 1 shown in Fig. 1. The method is implemented into the software of the MDM system 11 of the AMI 1, wherein the method comprises a step of displaying 201, by the GUI 15 of the MDM system 11, a filter option fora user to filter a subgroup of the utility devices 7 based on user-selected filter criteria being applied to utility device-associated data. It should be noted that the filtered subgroup of utility devices 7 may comprise utility meters 7a as well as radio infrastructure devices 7b. So, a user can filter for both utility meters 7a and data concentrators 7b' by combining user-selectable filter criteria. All applied user-selected filtercriteria in combination are stored in step 203. In step 205, the utility device-associated data is updated by the HES 9. The updating 205 is performed in parallel and independent of the other method steps. In step 207, the MDM system 11 dynamically refilters the same or a changed filtered subgroup of the utility devices 7 based on the stored user-selected filter criteria being applied to the updated utility device-associated data on a regular basis, upon a change of the utility device-associated data or upon a user request. In step 209, the GUI 15 of the MDM system 11 displays pre-determined or user-selected monitoring data based on the utility device-associated data of the currently filtered subgroup of the utility devices 7.

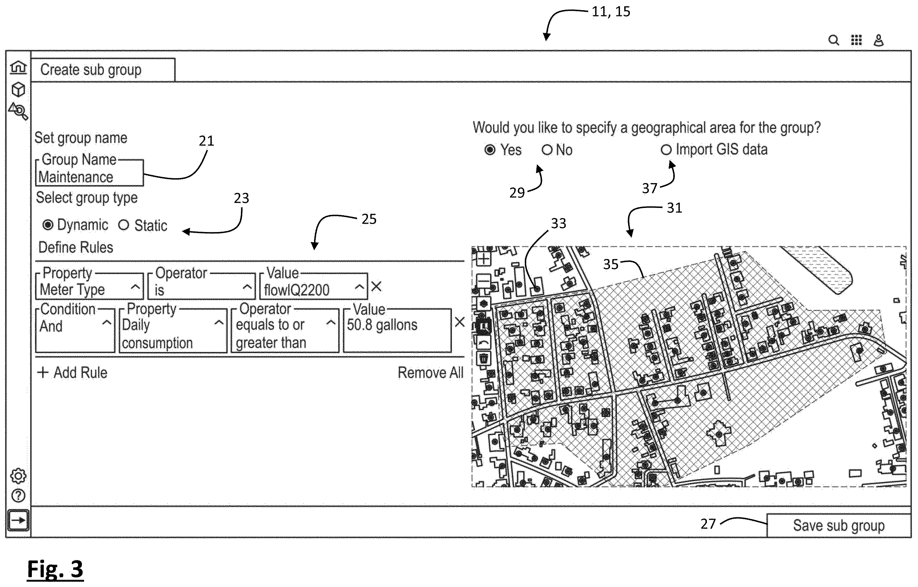

Fig. 3 shows an example of how the GUI 15 presents itself to a user on an internet browser of the computer device 17. The shown screenshot of the GUI 15 shows a situation in a filtering stage, i.e. in step 201 when the user is given an opportunity to define the filter criteria for filtering a subgroup of the utility devices 7. On the left-hand side of the screen, a user can give the subgroup a name at text box 21. Furthermore, a mode toggle 23 allows user to toggle between a dynamic mode and a static mode, wherein a change of the filtered subgroup of the utility devices is vetoed in the static mode. In the dynamic mode, the filtered subgroup changes dynamically upon an update of the utility device-associated data, i.e. the subgroup is refiltered regularly or automatically upon a change of the relevant utility device-associated data (step 207 of Fig. 2).

The GUI 15 further comprises a rule builder 25 consisting of lines of rules defining user-selectable filter criteria. A user can add orremove lines of rules. A user can combine the lines of rules by selectable Boolean operators, e.g. "AND" or "OR". Each rule may start with a user-selectable utility device-associated property, e.g. meter type or daily consumption. Then, a user can choose from a variety of relational operators, e.g. "=", "≥", "≤", "≠", "<", or ">", and a user-selectable value. The range of user-selectable values may depend on the chosen utility device-associated property. In the example shown in Fig. 3, a user wants, by applying the first line of rule, to filter all utility devices 7 with their meter type being "flowIQ2200". The range of allowable user-selectable values is here a drop-down menu to choose from. This excludes concentrators 7b' or other types of utility meters 7a from the selected subgroup. In the second line of rule, the user would like to filter only those utility devices 7 that show a daily consumption of at least 50.8 gallons. As the lines of rules are combined by an "AND", the subgroup only shows utility devices 7 of type "flowIQ2200" that show a daily consumption of at least 50.8 gallons. The user may save the filter criteria by pressing a save button 27 on the bottom right of the screen, i.e. inducing steps 203 and 205 in Fig. 2. It should be noted that the user-selected filter criteria are stored with the subgroup name given in text box 21. If the mode toggle 23 is set to "dynamic", the filtered subgroup changes dynamically, i.e. step 207 in Fig. 2, whenever the daily consumption value of a utility device 7 of type "flowIQ2200" crosses the user-selected threshold of 50.8 gallons.

On the right-hand side of the screen in Fig. 3, a user is given an option to apply, in addition, a geographic rule by a yes/no toggle 29. Below, the GUI 15 displays a map 31 indicating locations 33 of at least some of the utility devices 7. If the user chooses to apply the geographic rule by the yes/no toggle 29, the user can draw a polygon 35 on the map 31 encompassing a subset of the displayed utility devices 7. The geographic rule is applied as an additional filter criterion, i.e. combined with the previous lines of rules of the rule builder 25 by "AND". So, only those utility devices 7 of type "flowIQ2200" that are located within the polygon 35 and that show a daily consumption of at least 50.8 gallons are filtered.

Fig. 4 shows the same filter stage, i.e. step 201 of Fig. 2, of the GUI 15 as Fig. 3, but with different selected filter criteria. Thus, a user may want to choose a different subgroup name in text box 21. This time, the user does not want a dynamic update und chooses to switch the mode toggle 23 to "static". The filtered subgroup will thus not change irrespective of any changes of the relevant utility device-associated data.

The rule builder 25 is more complex in this example and comprises six combined lines of rules. Here, a user is interested to monitor only those utility devices 7 of type "flowIQ2200" that have been installed within the last 30 days inside the user-drawn polygon 35 on map 31 and have an active communication status and have previously sent data (initial reading ≠ 0). However, the user also wants to filter for data concentrators 7b' inside the polygon 35 on map 31 having a reading performance below 75%. So, the rules regarding the data concentrators 7b' are combined with the rules regarding the utility meters 7a by "OR". The rule builder 25 may offer brackets for a user to clarify the order in which the lines of rules are to be applied. As an alternative to the polygon 35 on the map 31, the GUI 15 offers a user a GIS option 37 to apply geographic information system, GIS, data, e.g. range of latitude/longitude, address, street, city, postal code, etc. as a geographic rule to be applied.

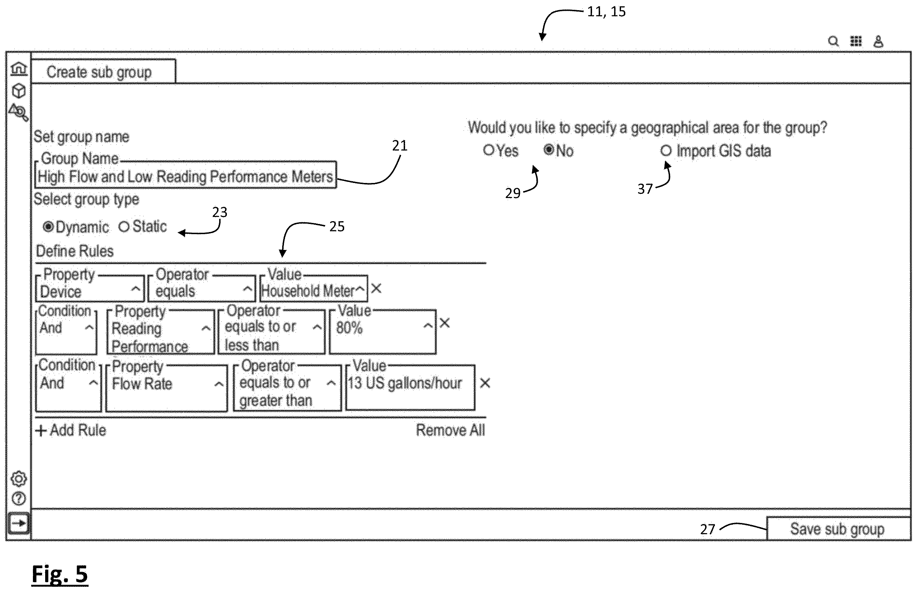

Fig. 5 shows another example of the filter stage, i.e. step 201 of Fig. 2, as it may be displayed by the GUI 15. This time, no geographic rule is applied by the user. The rule builder 25 comprises three lines of rule that dynamically filter all those utility devices 7 that are household meters 7a with a reading performance of up to 80% and a current flow rate of at least 13 US gallons per hour. The user's rationale is here to filter for those household meters 7a that may indicate a hidden leakage event. A high flow rate may be a sign of a leakage event, but a leakage alarm may, for example, only trigger at a current flow rate of at least 15 US gallons per hour. The low reading performance may indicate that data packages may have been lost and the true current flow rate may be higher than 13 US gallons per hour. So, by combining flow meter filter criteria with reading performance filter criteria, the filtered subgroup may indicate a hidden leakage event. The reading performance can be calculated in various ways, and here it is calculated as a ratio between the number of telegrams sent and received successfully compared to the total number of telegrams sent between a utility meter 7a and a data concentrator 7b'.

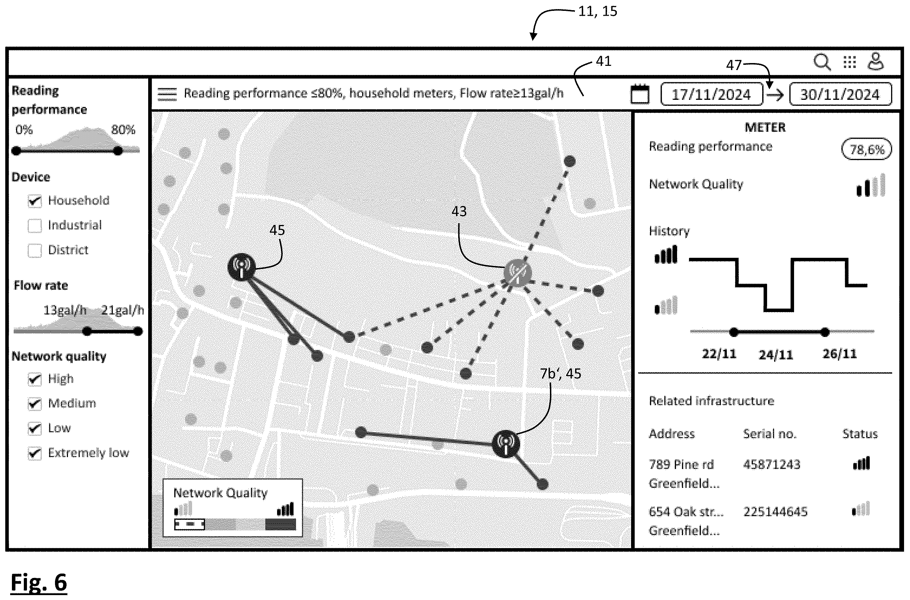

Fig. 6 shows an example of displaying monitoring data, i.e. step 209 of Fig. 2, for the filtered subgroup of Fig. 5. On the left-hand side, the applied filter criteria are shown in a different layout for a user to modify. A top banner 41 shows the currently applied filter criteria. In the centre, a map shows the filtered subgroup of household meters 7a and the communication links to data concentrators 7b', because the reading performance is a filter criterion. The quality of the reading performance is visualized by a colour or line style scheme. The dashed lines indicate a low reading performance with one of the data concentrators 7b' showing a "no-connection" symbol 43. The other two data concentrators 7b' show a "connected" symbol 45 and have solid communication lines to some of the filtered household meters 7a. A user may click on any of the filtered utility devices 7, 7b to get a summary of monitoring data displayed on the right-hand side of the screen. In Fig. 6, the user has clicked on the household meter 7a with two communication lines to different data concentrators 7b'. It therefore shows two radio infrastructure device 7b as related infrastructure and a varying reading performance overtime. The reading performance is here averaged over a time range 47 that is user-editable. In more detail, Fig. 6 shows a mix of utility meters 7a and data concentrators 7b', and the communication links between them. Combining this information has the advantage for a user of the MDM system that only highly relevant information is presented. In the case of suspected leakage events, a service technician of the utility network provider would normally have to inspect all of the filtered utility meters 7a shown in Fig. 6. However, as the communication link of some of the utility meters 7a is good with two of the concentrators 7b', the likelihood that those utility meters 7a show a true flow measurement and an intended high usage of flow is high. The service technician may therefore concentrate the attention upon those utility meters 7a that have a lower reading performance.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one aspect or embodiment may be used alone, or in combination with other features described, and may also be used in combination with one or more features of any other of the aspects or embodiments, or any combination of any other of the aspects or embodiments. While at least one exemplary aspect or embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics orsteps which have been described with reference to one of the above exemplary aspects or embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

### List of reference numerals

- 1: AMI
- 3: utility distribution network
- 5: household
- 7: utility devices
- 7a: utility meters
- 7b: radio infrastructure device(s)
- 7b': data concentrator
- 7b": antenna
- 9: HES
- 11: MDM system
- 13: cloud service
- 15: GUI
- 17: computer device
- 19: data storage
- 21: text box
- 23: mode toggle
- 25: rule builder
- 27: save button
- 29: yes/no toggle
- 31: map
- 33: locations
- 35: polygon
- 37: GIS option
- 41: top banner
- 43: "no-connection" symbol
- 45: "connected" symbol
- 47: time range

## Claims

1. An advanced metering infrastructure, AMI (1), wherein the AMI (1) comprises:
- a plurality of utility devices (7), wherein the utility devices (7) comprise
∘ utility meters (7a) being installed in a utility distribution network (3) for determining consumption data, and
∘ one or more radio infrastructure devices (7b) for wirelessly receiving and collecting the consumption data from at least one of the utility meters (7a);
- a head-end-system, HES, (9) for processing utility device-associated data that includes the consumption data, wherein the HES (9) is configured to update the utility device-associated data;
- a meter data management, MDM, system (11) with a graphical user interface, GUI (15), wherein the GUI (15) is configured to provide a filter option for a user to filter a subgroup of the utility devices (7) based on user-selectable filter criteria to be applied to the utility device-associated data; and
- a data storage (19) for storing user-selected filter criteria,
wherein the MDM system (11) is configured to dynamically refilter the same or a changed subgroup of the utility devices (7) based on the stored user-selected filter criteria to be applied to the updated utility device-associated data on a regular basis, upon a change of the utility device-associated data or upon a user request,
wherein the GUI (15) is configured to display pre-determined or user-selectable monitoring data based on the utility device-associated data of the currently filtered subgroup of the utility devices (7).

2. The AMI (1) of claim 1, wherein
the utility meters (7a) include electricity meters, water flow meters, gas meters or heat meters, and/or
the one or more radio infrastructure devices (7b) comprise one or more data concentrators (7b'), gateways and/or antennas (7b'').

3. The AMI (1) of claim 1 or 2, wherein the GUI (15) is configured to provide the filter option in form of a rule builder (25) including user-selectable Boolean logic to combine different user-selectable filter criteria to be applied to the utility device-associated data.

4. The AMI (1) of any of the preceding claims, wherein the GUI (15) is configured to provide a mode toggle (23) for a user to veto a change of the filtered subgroup of the utility devices (7).

5. The AMI (1) of any of the preceding claims, wherein the GUI (15) is configured to display first pre-determined or user-selectable monitoring data based on the utility device-associated data of a first filtered subgroup of the utility devices (7) and to display second pre-determined or user-selectable monitoring data based on the utility device-associated data of a second filtered subgroup of the utility devices (7) for comparison with the first pre-determined or user-selectable monitoring data.

6. The AMI (1) of claim 5, wherein the MDM system (11) is configured to prioritize among the first filtered subgroup and the second filtered group of utility devices (7) for maintenance service based on a prioritization algorithm of the MDM system (11).

7. The AMI (1) of any of the preceding claims, wherein the user-selected filter criteria to be applied to the utility device-associated data comprises one or more of a group consisting of:
- a user-defined time window of consumption data collection,
- a range of consumption data,
- a device operation mode,
- an event counter threshold,
- a radio communication performance indicator, and
- a device type.

8. The AMI (1) of any of the preceding claims, wherein the GUI (15) is configured to display a map (31) indicating locations (33) of at least some of the utility devices (7), and to give a user an option to draw a polygon (35) on the map (31) encompassing a subset of the displayed utility devices (7) as at least one of the user-selectable filter criteria.

9. The AMI (1) of any of the preceding claims, wherein the MDM system (11) is configured to include accessible geographic information system, GIS, data of the utility devices (7) for applying the user-selectable filter criteria to the utility device-associated data.

10. The AMI (1) of any of the preceding claims, wherein the HES (9) is configured to process the utility device-associated data in form of acoustic noise data, flow rates, radio communication performance, water temperatures and/or event counters.

11. The AMI (1) of any of the preceding claims, wherein the GUI (15) is configured to display a map (31) indicating locations (33) of at least one of the radio infrastructure devices (7b) and indicators for highlighting utility meters (7a) that have an indicated radio communication performance with said at least one of the radio infrastructure devices (7b) below a user-selectable limit, wherein the GUI (15) is further configured to give a user an option to filter some or all of the highlighted utility meters (7a) as at least one of the user-selected filter criteria for filtering a subgroup of the utility devices (7).

12. A computer-implemented method for monitoring utility devices (7) of an advanced metering infrastructure, AMI (1), by using a meter data management, MDM, system (11) of the AMI (1), wherein the method comprises:
- displaying (201), by a graphical user interface, GUI (15), of the MDM system (11), a filter option for a user to define a filter for a subgroup of the utility devices (7) based on user-selected filter criteria being applied to utility device-associated data,
- storing (203) the user-selected filter criteria,
- updating (205) the utility device-associated data,
- dynamically refiltering (207) the same or a changed subgroup of the utility devices (7) based on the stored user-selected filter criteria being applied to the updated utility device-associated data on a regular basis, upon a change of the utility device-associated data or upon a user request, and
- displaying (209), by the GUI (15) of the MDM system (11), pre-determined or user-selected monitoring data based on the utility device-associated data of the currently filtered subgroup of the utility devices (7).

13. The computer-implemented method of claim 12, wherein the utility devices (7) include
- utility meters (7a) being installed in a utility distribution network (3) for determining consumption data, and
- one or more radio infrastructure devices (7b) for wirelessly receiving and collecting the consumption data from at least one of the utility meters (7a).

14. The computer-implemented method of claim 12 or 13, wherein the utility devices (7) are of the type utility meters (7a), for example, electricity meters, water flow meters, gas meters or heat meters, and/or data collectors (7b') for collecting the utility device-associated data from a plurality of such utility meters (7a).

15. The computer-implemented method of claim 12 to 14, wherein the filter option is provided in form of a rule builder (25) including user-selectable Boolean logic to combine different user-selected filter criteria being applied to the utility device-associated data.

16. The computer-implemented method of any of the claims 12 to 15, further comprising displaying, by the GUI (15) of the MDM system (11), a mode toggle (23) for a user to veto a change of the filtered subgroup of the utility devices (7).

17. The computer-implemented method of any of the claims 12 to 16, wherein the step of displaying (209) pre-determined or user-selected monitoring data includes displaying first pre-determined or user-selected monitoring data based on the utility device-associated data of a first filtered subgroup of the utility devices (7) and displaying second pre-determined or user-selected monitoring data based on the utility device-associated data of a second filtered subgroup of the utility devices (7) for comparison with the first pre-determined or user-selected monitoring data.

18. The computer-implemented method of claim 17, further comprising a step of prioritizing among the first filtered subgroup and the second filtered group of utility devices (7) for maintenance service based on a prioritization algorithm of the MDM system (11).

19. The computer-implemented method of any of the claims 12 to 18, wherein the user-selected filter criteria applied to the utility device-associated data comprises one or more of a group consisting of:
- a user-defined time window of consumption data collection,
- a range of consumption data,
- a device operation mode,
- an event counter threshold,
- a radio communication performance indicator, and
- a device type.

20. The computer-implemented method of any of the claims 12 to 19, wherein the step of displaying (201) a filter option includes displaying a map (31) indicating locations (33) of at least some of the utility devices (7), wherein a user is given an option to draw a polygon (35) on the map (31) encompassing a subset of the displayed utility devices (7) as at least one of the user-selected filter criteria.

21. The computer-implemented method of any of the claims 12 to 20, wherein user-selected filter criteria applied to utility device-associated data includes accessible geographic information system, GIS, data of the utility devices (7).

22. The computer-implemented method of any of the claims 12 and 20, wherein the utility device-associated data comprises acoustic noise data, flow rates, radio communication performance, water temperatures and/or event counters.

23. The computer-implemented method of any of the claims 12 and 22, wherein the step of displaying (201) a filter option includes displaying a map (31) indicating locations (33) of at least one radio infrastructure device (7b) and indicators for highlighting utility meters (7a) that have a wireless communication strength with said at least one radio infrastructure device (7b) below a user-selectable limit, wherein a user is given an option to filter some or all of the highlighted utility meters (7a) as at least one of the user-selected filter criteria for filtering a subgroup of the utility devices (7).
